# EUROPEAN PATENT APPLICATION

(11) **EP 2 832 632 A1**
(43) Date of publication of application: **04.02.2015**
(21) Application number: 14179014.7
(22) Date of filing: 29.07.2014
(51) Int. Cl.: B62M 9/136, B62J 13/00, B62J 13/02, B62M 9/00

(54) **Chain guide device**

(30) Priority: 29.07.2013 IT TV20130119
(71) Applicant: Landscape Adventures SNC di Dal Col Alberto e Pozzatello Giulio, 31040 Nervesa della Battaglia (TV) (IT)
(72) Inventor: Pozzatello, Giulio, 31040 Nervesa della Battaglia (Treviso) (IT); Dal Col, Alberto, 31040 Nervesa della Battaglia (Treviso) (IT)
(74) Representative: Dragotti, Gianfranco

(57) **Abstract**

The present invention relates to a chain guide device (10) for gravity or all-mountain bicycles comprising a frame (11) and a toothed chainring (12) on which the pedals are mounted.

The chain guide device (10) is intended to be positioned coupled with the chainring (12) in such a way as to prevent the chain (14) of the bicycle from coming off the teeth of the chainring (12).

The chain guide device (10) comprises: a top guide (20) intended during use to be positioned along the top portion of the chainring (12) and provided with a first groove (22); a bottom guide (30) intended during use to be positioned in the vicinity of the bottom portion of the chainring (12) and provided with a second groove (32); said top guide (20) and said bottom guide (30) being arranged on a support (40) by means of which the chain guide device (10) is fixed to the frame (11) of the bicycle.

In accordance with the invention, the first groove (22) and the second groove (32) interact directly with portions of the chain (14) which are directly engaged with the chainring (12), coming into contact with the chain only if the chain tends to disengage from the teeth of the chainring.

## Description

The present invention relates to a chain guide device.

This device is used generally in bicycles of the gravity and/or all-mountain type and has the function of preventing the chain from coming off the front chainring as a result of jolts due to the unevenness of the ground.

The chain guide devices of the known type are usually composed of two guides, a top guide and a bottom guide, which perform a containing function.

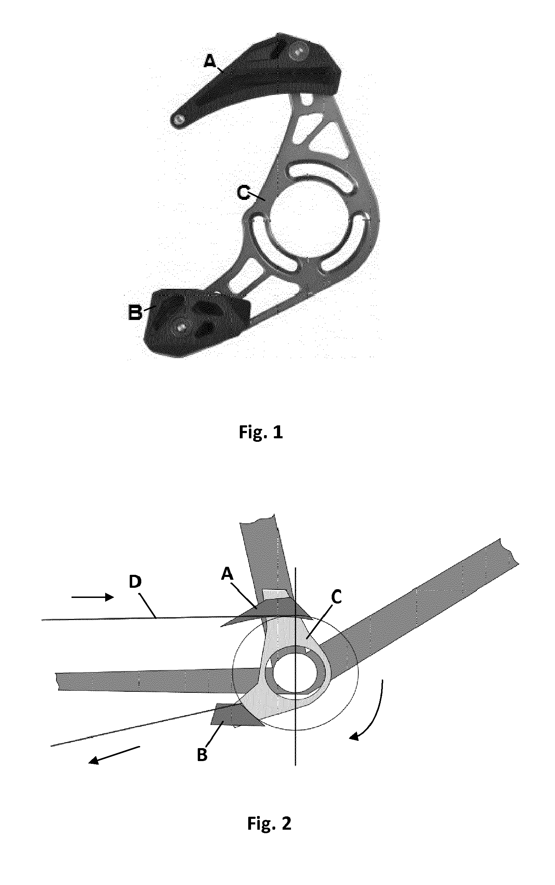

In the known devices, shown schematically in Figures 1 and 2 accompanying the present invention, the top guide is indicated by A and the bottom guide is indicated by B.

The top guide A has a straight groove inside which the chain travels and has the function of preventing disengagement, i.e. the chain from coming off the chainring, when the chain is subjected to jolts since the chain is retained owing to the contact it makes with the inner surface of the groove.

The bottom guide B has, in turn, the function of keeping the chain on the chainring and usually is composed of a toothed rotating wheel or a smooth rotating roller or a fixed guide, always engaged with the chain.

The top guide A and bottom guide B are connected together by means of a support C, commonly called "spider", which allows the chain guide device to be fixed to the bicycle frame, allowing the two guides to be correctly positioned.

As schematically shown in Figure 2, in the known chain guide devices, both the top guide A and the bottom guide B act on a chain portion which no longer makes contact with the chainring, i.e. act on the chain portion which is not engaged by the chainring teeth. Respectively, the top guide A acts on a chain portion which must yet come into contact with the chainring, while the bottom guide B acts on a chain portion which has left the chainring.

The known devices, although widely appreciated, have however a number of drawbacks. With reference to the top guide A and Figure 2, it can be noted how this top guide comes into contact with the chain D if the latter, following jolting of the bicycle, tends to become disengaged from the toothed chainring, this being possible only if the chain is deviated upwards with respect to its normal arrangement.

Obviously, when the chain comes into contact with the top guide, friction arises which therefore results in greater effort on the part of the cyclist and an increase in noisiness. The bottom guide B acts so that the chain remains in contact with a greater circumferential portion of the chainring and consequently this results in greater friction which likewise results in greater effort on the part of the cyclist during pedalling, even when there is no jolting.

Moreover, this bottom guide B, being in continuous contact with the chain, causes an increase in the noisiness with a consequent reduction in the comfort.

Finally, there is a change in the alignment of the chain, i.e. the chain line, leaving the chainring and entering the sprocket of the cogset, has a greater angle than the case where the bottom guide is not present.

This has the result that there may be possible problems of the chain coming off when pedalling backwards, a technique used by cyclists just before jumps or tight bends.

The object of the present invention therefore is to overcome at least partially the drawbacks mentioned above with reference to the prior art.

In particular, one aim of the present invention is to provide a chain guide device able to prevent the chain from coming off the chainring, without an increase in the friction between the chain and the chainring of the bicycle.

Another aim of the present invention is to provide a chain guide device which may operate in a silent and reliable manner.

Another aim of the present invention is to provide a chain guide device able not to interfere with the normal alignment of the chain, also in the case where the cogset, i.e. the set of concentric sprockets fixed to the hub of the rear wheel of the bicycle, is subject to jolting.

Finally, a further aim of the present invention is to provide a chain guide device which may also provide protection against stones, branches or soil for that portion of the chain which is engaged with the toothed chainring.

The object and aim indicated above are achieved by a chain guide device according to claim 1.

The characteristic features and further advantages of the invention will become clear from the description hereinbelow of a number of examples of embodiment, provided by way of a non-limiting example, with reference to the accompanying drawings in which:
- Figure 1 shows in schematic form a side view of a chain guide device according to the prior art;
- Figure 2 shows in schematic form the operating mode of a chain guide device according to the prior art;
- Figure 3 shows a perspective view of a chain guide device according to the invention;
- Figure 4 shows a view which is similar to that of Figure 2, but which illustrates the operating mode of the chain guide device according to the invention;
- Figure 5 shows an internal side view of a component of the chain guide device according to the invention;
- Figure 6 shows a view, from below, of the component shown in Figure 5;
- Figure 7 shows a perspective view of the device shown in Figure 5;
- Figure 8 shows a side view of a second component of the guide device according to the invention;
- Figure 9 shows a rear view of the component shown in Figure 8;
- Figure 10 shows a top plan view of the component shown in Figure 8.

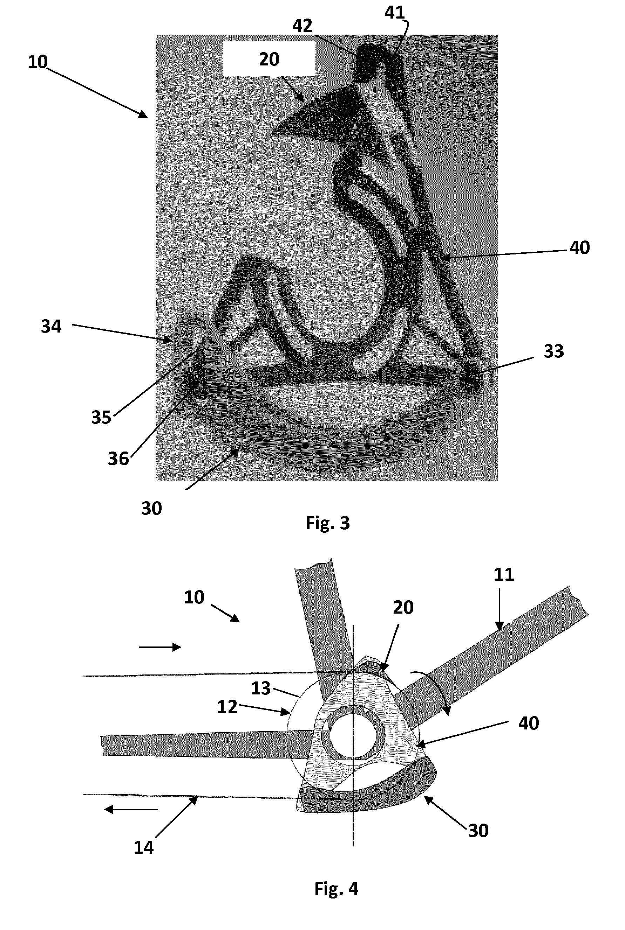

With reference to Figures 3-10, a chain guide device according to the principles of the present invention is indicated in its entirety by 10.

Said chain guide device 10 is suitable for being mounted on bicycles of the gravity or all-mountain type. This type of bicycle is understood as meaning bicycles which have a single pedal-carrying chainring.

With specific reference to Figure 3, the chain guide device 10 is intended to be mounted on a bicycle comprising a frame 11 and a toothed chainring 12 on which the bicycle pedals (not shown in the attached figures) are mounted.

This device 10 is intended to be positioned coupled with the chainring 12 in such a way as to prevent the chain 14 of the bicycle from coming off the teeth of the chainring 12.

The chain guide device 10 comprises a top guide 20 intended during use to be positioned on the vicinity of the top portion of the chainring 12, "top portion of the chainring 12" being understood as meaning the part of the chainring which during use is relatively further from the ground.

The top guide 20 is provided with a first groove 22.

The chain guide device 10 further comprises a bottom guide 30 intended during use to be positioned on the vicinity of the bottom portion of the chainring 12, "bottom portion of the chainring 12" being understood as meaning the part of the chainring which during use is relatively closer to the ground.

The bottom guide 30 is provided with a second groove 32.

As shown in Figures 3 and 4, the top guide 20 and bottom guide 30 are arranged on a support 40 by means of which the chain guide device 10 is fixed to the frame 11 of the bicycle.

In accordance with the invention, the first groove 22 and the second groove 32 interact directly with the portions of the chain 14 which are directly engaged with the chainring 12, coming into contact with the chain only if the chain tends to become disengaged from the teeth of the chainring 12.

In other words, the first groove 22 and the second groove 32 are arranged facing portions of the chain 14 which are engaged by the teeth of the chainring.

Advantageously, this innovative arrangement of the top guide and the bottom guide enables various advantages to be obtained.

Firstly, both the top guide and the bottom guide in normal working conditions do not interfere with the normal alignment of the chain.

Even in this case of jolting of the rear wheel and therefore the cogset of the bicycle, which could cause upwards deviation of the chain from its normal arrangement, the top guide does not make contact with the chain. Friction between guide and chain which could damage the pedalling action therefore does not arise.

At the same time, the groove 22 of the top guide 20 ensures that the chain in the zone of the engagement with the chainring remains in close contact. In this way it is ensured that the chain does not come off the chainring.

Moreover, the bottom guide comes into contact with the chain only where necessary, i.e. should the chain tend to come off the chainring. During normal use, the bottom guide does not make contact with the chain and this means that there is no friction between chain and guide which could hinder the pedalling action of the cyclist.

Moreover, it ensures a reduction in the noisiness of the chain.

Finally, both the top guide and the bottom guide may act as a protection for the chain against stones, branches and soil, reducing the risk that foreign bodies becoming lodged between chainring and chain, hindering the pedalling action of the cyclist.

As can be clearly seen in the accompanying figures, the groove 22 of the top guide is preferably shaped in the manner of a circumferential arc concentric with the outer profile 13 of the chainring 12.

In this way, it is ensured that the chain, in normal conditions of use, does not come into contact with the groove 22. At the same time the groove 22, since it is shaped according to the profile of the chainring, is able to keep the chain in the correct position, should the latter tend to come off the chainring.

Similarly, also the groove 32 of the bottom guide 30 is shaped in the manner of a circumferential arc concentric with the outer profile of the chainring 12.

In this case also the particular configuration of the groove 32 ensures, on the one hand, that the bottom guide does not interfere, except where necessary, with the chain while, at the same time, it ensures that the chain does not come off the chainring.

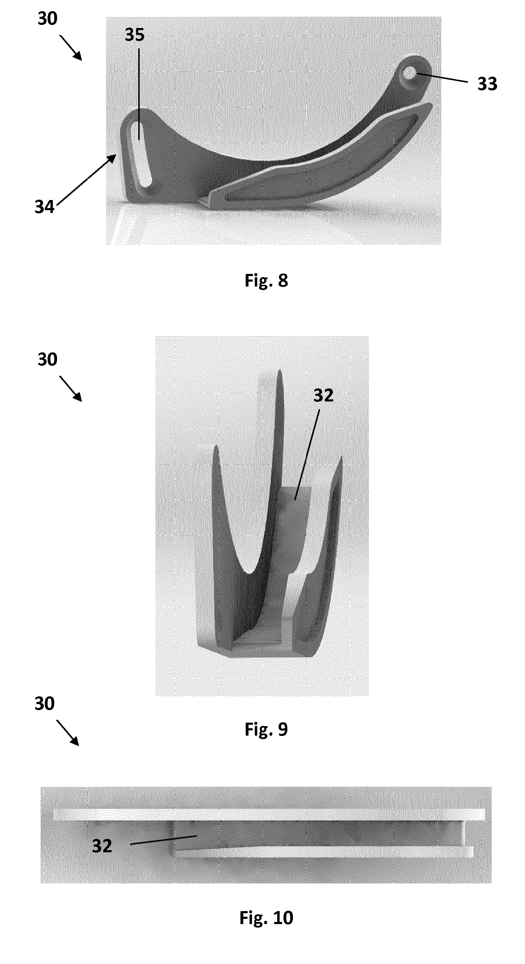

As can be clearly seen in Figure 10, the groove 32 preferably has a non-uniform width. Preferably, the width of the groove 32 is greater in the vicinity of the rear portion of the groove, rear portion of the groove being understood as meaning the portion during use closer to the cogset of the bicycle.

In other words, the groove is preferably flared along its rear portion so as to allow the chain to switch between the various sprockets of the cogset without interfering with the guide 30.

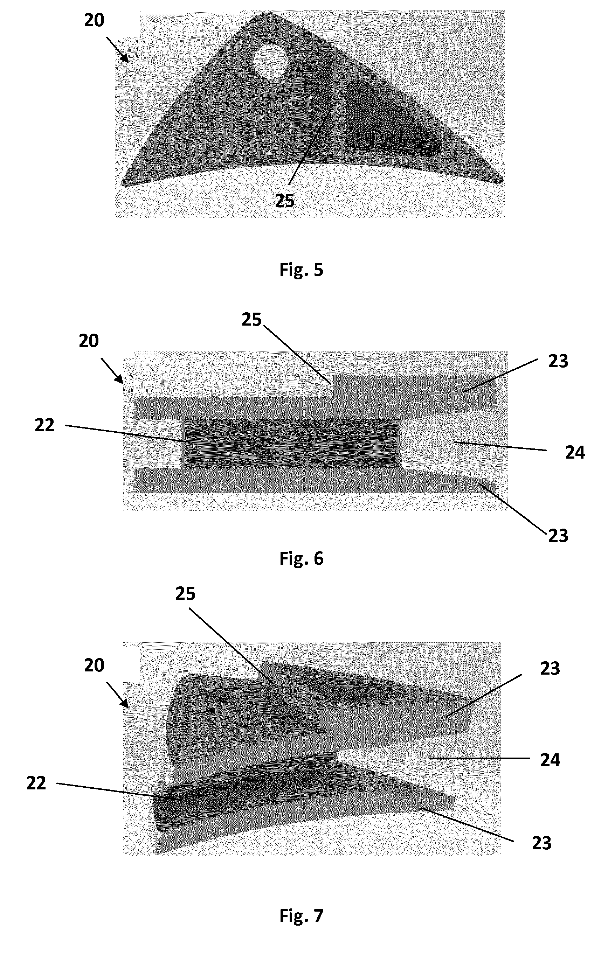

Similarly, as can be clearly seen in Figure 6, the top guide 20 preferably has, along its rear portion, i.e. the portion closer to the cogset, two flanges 23.

These flanges 23 define an opening 24 which allows the chain to oscillate also when entering the chainring 12, without coming into contact with the top guide.

Preferably, as can be clearly seen in Figure 6, this opening 24 is flared.

Even though the attached figures show a chain guide device provided with a top guide 20 and a bottom guide 30 which are separate from each other, a person skilled in the art may easily imagine providing the chain guide device 10 with a connecting portion for connecting together the top guide and the bottom guide, which is provided with a continuous groove which surrounds the whole of the chainring part engaged by the chain.

This embodiment advantageously acts as a protection for a larger-size circumferential section of the chainring.

Preferably, the top guide 20 and the bottom guide 30 are made of polymeric material. Advantageously, the support 40 is made of metallic material, preferably aluminium. In this way, it ensures the necessary lightness of the device and guarantees a stable connection between frame and chain guide device.

The top guide 20 and the bottom guide 30 preferably are fixed in a removable and adjustable manner to the support 40.

As can be seen in Figures 3 and 8, a first end 33 of the bottom guide 30 is pivotably mounted on a first arm of the support 40.

Preferably, a second end 34 of the bottom guide 30 comprises an eyelet 35 suitable for being slidably engaged by fixing means 36 which are connected to the support 40.

In this way it is possible to rotate the bottom guide around the first end, allowing the chain guide device to be adapted to different types of chainrings, for example chainrings with 28 teeth or chainrings with 36 teeth.

The top guide 20 is also preferably provided with adjusting means which allow it to be moved away from the centre of the device and therefore adapted to different types of chainrings.

In the embodiment shown in the figures, the support 40 on its top arm is provided with a groove 41 suitable for being slidably engaged by a projection, for example a bolt, connected to the top guide 20.

With reference still to the attached figures, the top guide 20 is provided on the surface facing the support 40 with a step 25 suitable for engagement with a perimetral surface 42 of the support 40. In this way it is ensured that the top guide 20 does not rotate with respect to the support 40.

On the basis of the above, it is clear how the chain guide device 10 has characteristics such as to advantageously overcome the problems and drawbacks of the prior art.

To summarize, by the application of the present innovation, the following results are achieved:
a) the chain is prevented from coming off the chainring, by adjusting the top guide and the bottom guide in such a way that they are spaced by a predefined and/or adjustable distance, preferably about 1.5 mm from the chain, without creating friction;
b) the noise of frictional contact of the chain - which in the known devices travels along the bottom guide - is eliminated;
c) the chain is kept in the correct position since the chain guide device does not interfere with the portions of the chain leaving or entering the chainring.

The person skilled in the art, in order to satisfy specific requirements, may make modifications to the embodiments described above and/or replace the parts described with equivalent parts, without thereby departing from the scope of the accompanying claims.

## Claims

1. Chain guide device (10) for gravity or all-mountain bicycles comprising a frame (11) and a toothed chainring (12) on which the pedals are mounted, said chain guide device (10) being intended to be positioned coupled with the chainring (12) in such a way as to prevent the chain (14) of the bicycle from coming off the teeth of the chainring (12), said chain guide device (10) comprising:
- a top guide (20) intended during use to be positioned along the top portion of the chainring (12) and provided with a first groove (22);
- a bottom guide (30) intended during use to be positioned in the vicinity of the bottom portion of the chainring (12) and provided with a second groove (32);
- said top guide (20) and said bottom guide (30) being arranged on a support (40) by means of which the chain guide device (10) is fixed to the frame (11) of the bicycle; **characterized in that**:
the first groove (22) and the second groove (32) interact with the portions of the chain (14) which are directly engaged with the chainring (12), coming into contact with the chain only if the chain tends to become disengaged from the teeth of the chainring.

2. Chain guide device (10) according to Claim 1, **characterized in that** the first groove (22) is shaped in the manner of a circumferential arc concentric with the outer profile (13) of the chainring (12).

3. Chain guide device (10) according to Claim 1, **characterized in that** the second groove (32) is shaped in the manner of a circumferential arc concentric with the outer profile (13) of the chainring (12).

4. Chain guide device (10) according to Claim 1, **characterized in that** the top guide (20) and the bottom guide (30) are fixed in a removable and adjustable manner to the support (40).

5. Chain guide device (10) according to Claim 1, **characterized in that** the second groove (32) has a non-uniform width; the width of the second groove (32) being greater in the vicinity of the rear portion of the groove (32).

6. Chain guide device (10) according to Claim 1, **characterized in that** the top guide (20) along its rear portion has two flanges (23) which define an opening (24) which allows oscillation of the chain (14) during entry onto the chainring (12).

7. Chain guide device (10) according to Claim 6, **characterized in that** said opening (24) is flared.

8. Chain guide device (10) according to Claim 1, wherein the top guide (20) and the bottom guide (30) are made of polymeric material.

9. Chain guide device (10) according to Claim 1, wherein the support (40) is made of metallic material, preferably aluminium.

10. Chain guide device (10) according to Claim 4, **characterized in that** a first end (33) of the bottom guide (30) is pivotably mounted on a first arm of the support (40).

11. Chain guide device (10) according to Claim 10, **characterized in that** a second end (34) of the bottom guide (30) comprises an eyelet (35) suitable for being slidably engaged by fixing means (36) connected to the support (40).

12. Chain guide device (10) according to Claim 1, **characterized in that** the top guide (20) is provided on its surface facing the support (40) with a step (25) suitable for engagement with a perimetral surface (41) of the support (40) so as to prevent rotation of the top guide (20) with respect to the support (40).
